# EUROPEAN PATENT APPLICATION

(11) **EP 4 329 052 A1**
(43) Date of publication of application: **28.02.2024**
(21) Application number: 23712435.9
(22) Date of filing: 04.01.2023
(51) Int. Cl.: H01M 50/102, H01M 50/148

(54) **HOUSING, ARC-SHAPED BATTERY, AND ELECTRIC DEVICE**

(30) Priority: 23.06.2022 CN 202210719576
(71) Applicant: Ningde Amperex Technology Limited, Ningde City, Fujian Province 352100 (CN)
(72) Inventor: LI, Chenchen, Ningde, Fujian 352100 (CN); HE, Ping, Ningde, Fujian 352100 (CN); XU, Zhonghuang, Ningde, Fujian 352100 (CN); LIU, Ning, Ningde, Fujian 352100 (CN)
(74) Representative: Icosa
(86) International application number: PCT/CN2023/070492
(87) International publication number: WO 2023/246078

(57) **Abstract**

This application provides a housing, an arc battery, and an electric device. The housing includes two cover plates and a middle frame that are separately disposed, where the two cover plates are both arc plates, the middle frame has two opposite openings in a first direction, and the two cover plates are configured to respectively cover the two openings, so that the middle frame and the two cover plates jointly define an accommodating space. The two cover plates of the housing are both arc plates, and therefore the housing can be used for arc batteries. The housing is divided into two arc cover plates and a middle frame that are separately disposed. The middle frame and the two cover plates each are easy to manufacture, and the separate middle frame and two cover plates are connected to form the housing with the accommodating space, thereby reducing the manufacturing difficulty and costs of housings of arc batteries.

## Description

### CROSS-REFERENCE TO RELATED APPLICATIONS

This application claims priority to Chinese patent application No. 202210719576.8, filed on June 23, 2022 and entitled "HOUSING, ARC BATTERY, AND ELECTRIC DEVICE", which is incorporated herein by reference in its entirety.

### TECHNICAL FIELD

This application relates to the field of battery technologies, and specifically, to a housing, an arc battery, and an electric device.

### BACKGROUND

Secondary batteries such as lithium-ion batteries, sodium-ion batteries, and solid-state batteries have outstanding advantages, for example, high energy density and good cycling performance, and have been widely used in portable electronic devices, electric transportation tools, electric tools, unmanned aerial vehicles, energy storage devices, and other fields.

It is a challenge to manufacture housings for batteries of special shapes. Decreasing the difficulty of manufacturing the housings for batteries of special shapes can help reduce manufacturing costs and increase production efficiency. Therefore, how the difficulty of manufacturing the housings for batteries of special shapes is decreased has become a problem to be resolved urgently in the field of battery technologies.

### SUMMARY

Some embodiments of this application provide a housing, an arc battery, and an electric device, so as to decrease the difficulty of manufacturing housings for arc batteries.

According to a first aspect, an embodiment of this application provides a housing including two cover plates and a middle frame that are separately disposed, where the two cover plates are both arc plates, the middle frame has two opposite openings in a first direction, and the two cover plates are configured to respectively cover the two openings, so that the middle frame and the two cover plates jointly define an accommodating space.

In the foregoing technical solution, the two cover plates of the housing are both arc plates, and therefore the housing can be used for arc batteries. The housing is divided into two arc cover plates and a middle frame that are separately disposed. The middle frame and the two cover plates each are easy to manufacture, and the separate middle frame and two cover plates are connected to form the housing with the accommodating space, thereby reducing the manufacturing difficulty and costs of housings of arc batteries.

In some embodiments of the first aspect of this application, the middle frame includes two first walls provided opposite in a second direction and two second walls provided opposite in a third direction, the two first walls and the two second walls are connected end to end in sequence, and the first direction, the second direction, and the third direction are perpendicular to each other.

In the foregoing technical solution, the rectangular middle frame structure is formed by providing the two first walls opposite in the second direction, providing the two second walls opposite in the third direction, and connecting the two first walls and the two second walls end to end in sequence, so that the middle frame is simple in structure and easy to manufacture and shape.

In some embodiments of the first aspect of this application, the first wall has two opposite arc edges in the first direction, and the two cover plates are respectively connected to the two arc edges.

In the foregoing technical solution, the two arc edges of the first wall in the first direction are respectively connected to the two cover plates, so as to match the structural shape of the cover plates, so that the cover plates can better cover the openings of the middle frame, thereby improving airtightness performance of the accommodating space.

In some embodiments of the first aspect of this application, the second wall has two opposite straight edges in the first direction, and the two cover plates are respectively connected to the two straight edges.

In the foregoing technical solution, the second wall has the two straight edges in the first direction so that the second wall better serves as a tab mounting wall, facilitating the connection to the cover plate.

In some embodiments of the first aspect of this application, the middle frame is an integrally formed structure.

In the foregoing technical solution, the middle frame is an integrally formed structure made in a simple manner, and therefore is easy to manufacture.

In some embodiments of the first aspect of this application, the middle frame is formed by bending a plate, and two ends of the plate are connected.

In the foregoing technical solution, the middle frame is formed by bending a plate and connecting two ends of the plate, making full use of plates and facilitating the manufacturing of middle frames of various sizes.

In some embodiments of the first aspect of this application, arc angles and extending angles of the two cover plates are substantially the same.

In the foregoing technical solution, the arc angles and extending angles of the two cover plates being substantially the same makes the housing more regular in structure, facilitates assembly, and reduces the manufacturing difficulty of housings.

In some embodiments of the first aspect of this application, wall thickness of the middle frame is L, satisfying 100 µm ≤ L ≤ 1500 µm.

In the foregoing technical solution, the wall thickness L of the middle frame satisfying 100 µm ≤ L ≤ 1500 µm makes the middle frame have higher structural strength so as to better support the two cover plates, thereby reducing the collapse risks of housings. In addition, the wall thickness L of the middle frame satisfying 100 µm ≤ L ≤ 1500 µm can make the middle frame have higher rigidity so as to reduce the deformation risks of the middle frame while such deformation makes the housing lose its arc shape or have a lower bending degree.

In some embodiments of the first aspect of this application, wall thickness of the middle frame is larger than a thickness of the cover plate.

In the foregoing technical solution, the thickness of the cover plate being smaller than the wall thickness of the middle frame can guarantee the overall structural strength of the housing and provide a sufficient distance between the two cover plates so as to accommodate a large electrode assembly in the first direction, thereby helping improve the energy density of arc batteries having such housing.

In some embodiments of the first aspect of this application, wall thickness of the cover plate is H, satisfying 50 µm ≤ H ≤ 1000 µm.

In the foregoing technical solution, the thickness H of the cover plate satisfying 50 µm ≤ H ≤ 1000 µm can guarantee that the cover plate has structural strength that meets actual needs, and provide a sufficient distance between the two cover plates in the first direction so as to accommodate a large electrode assembly in the first direction, thereby helping improve the energy density of arc batteries having such housing.

In some embodiments of the first aspect of this application, the wall thickness L of the middle frame and thickness H of the cover plate satisfy 50 µm ≤ L - H ≤ 500 µm.

In the foregoing technical solution, the wall thickness L of the middle frame satisfies 50 µm ≤ L - H ≤ 500 µm, and the thickness difference between the cover plate and the middle frame within this range can allow the accommodating space to accommodate a larger electrode assembly, thereby improving the energy density of arc batteries having such housing.

In some embodiments of the first aspect of this application, 50 µm ≤ L - H ≤ 200 µm, and a curvature radius R of the cover plate satisfies 80 mm ≤ R ≤ 300 mm; or 200 µm < L - H ≤ 500 µm, and curvature radius R of the cover plate satisfies R < 80 mm.

In the foregoing technical solution, the curvature radius R of the cover plate, the thickness H of the cover plate, and the wall thickness L of the middle frame meeting the foregoing relationship can ensure that the housing can accommodate a larger electrode assembly while ensuring that the housing has high structural strength, thereby optimizing the energy density of arc batteries having such housing.

In some embodiments of the first aspect of this application, the curvature radius R of the cover plate satisfies 80 mm ≤ R ≤ 300 mm, and 50 µm ≤ L - H ≤ 100 µm; or the curvature radius R of the cover plate satisfies R < 80 mm, and 200 µm ≤ L - H ≤ 300 µm.

In the foregoing technical solution, the curvature radius R of the cover plate, the thickness H of the cover plate, and the wall thickness L of the middle frame meeting the foregoing relationship can ensure that the housing can accommodate a larger electrode assembly while ensuring that the housing has high structural strength, thereby optimizing the energy density of arc batteries having such housing, and allowing the structure and size of products to better meet actual needs.

In some embodiments of the first aspect of this application, a thickness of the cover plate is larger than wall thickness of the middle frame.

In the foregoing technical solution, the thickness of the cover plate being larger than the wall thickness of the middle frame can make the housing have higher structural strength on the whole and make the cover plate unlikely to deform, allowing the cover plate to have a more stable arc shape.

In some embodiments of the first aspect of this application, the thickness H of the cover plate satisfies 150 µm ≤ H ≤ 2000 µm.

In the foregoing technical solution, the wall thickness H of the cover plate satisfying 150 µm ≤ L ≤ 2000 µm allows the cover plate to have higher structural strength and high rigidity so as to reduce the deformation risks of the cover plate while such deformation makes the housing lose its arc shape or have a lower bending degree.

In some embodiments of the first aspect of this application, the wall thickness L of the middle frame and the thickness H of the cover plate satisfy 50 µm ≤ H - L ≤ 500 µm.

In the foregoing technical solution, the wall thickness L of the middle frame satisfies 50 µm ≤ H - L ≤ 500 _{[}tm, and the thickness difference between the cover plate and the middle frame within this range reduces the deformation risks of the cover plate caused by swelling in arc batteries having such housing while such deformation makes the housing lose its arc shape or have a lower bending degree.

In some embodiments of the first aspect of this application, 20 µm ≤ H - L ≤ 100 µm, and a curvature radius R of the cover plate satisfies 80 mm ≤ R ≤ 300 mm; or 100 µm < H - L ≤ 500 µm, and curvature radius R of the cover plate satisfies R < 80 mm.

In the foregoing technical solution, the curvature radius R of the cover plate, the thickness H of the cover plate, and the wall thickness L of the middle frame meeting the foregoing relationship can allow the cover plate to deform least in a case of internal swelling of arc batteries having such housing, thereby reducing the deformation risks of the cover plate caused by swelling in arc batteries having such housing while such deformation makes the housing lose its arc shape or have a lower bending degree.

In some embodiments of the first aspect of this application, the curvature radius R of the cover plate satisfies 80 mm ≤ R ≤ 300 mm, and 20 µm ≤ H - L ≤ 50 µm; or the curvature radius R of the cover plate satisfies R < 80 mm, and 100 µm < H - L ≤ 200 µm.

In the foregoing technical solution, the curvature radius R of the cover plate, the thickness H of the cover plate, and the wall thickness L of the middle frame meeting the foregoing relationship can allow the cover plate to deform least in a case of internal swelling of arc batteries having such housing, thereby reducing the deformation risks of the cover plate caused by swelling in arc batteries having such housing while such deformation makes the housing lose its arc shape or have a lower bending degree. and allowing the structure and size of products to better meet actual needs.

According to a second aspect, an embodiment of this application provides an arc battery including an electrode assembly and the housing according to some embodiments of the first aspect.

In the foregoing technical solution, the housing according to some embodiments of the first aspect includes the two cover plates and the middle frame that are disposed separately. The middle frame and the two cover plates each are easy to manufacture, the separate middle frame and two cover plates are connected to form the housing with the accommodating space, and therefore the difficulty of manufacturing the housing is reduced, thereby reducing the manufacturing difficulty and cost of arc batteries.

According to a third aspect, an embodiment of this application provides an electric device including the arc battery according to the second aspect.

### BRIEF DESCRIPTION OF DRAWINGS

In order to describe the technical solutions in some embodiments of this application more clearly, the following briefly describes the accompanying drawings required for describing the embodiments. It is appreciated that the accompanying drawings below only show some embodiments of this application and thus should not be considered as limitations on the scope. Persons of ordinary skill in the art may still derive other related drawings from the accompanying drawings without creative efforts.
FIG. 1 is an exploded view of an arc battery in the prior art;
FIG. 2 is an exploded view of another arc battery in the prior art;
FIG. 3 is an exploded view of an arc battery according to some embodiments of this application;
FIG. 4 is an exploded view of a housing according to some embodiments of this application;
FIG. 5 is a schematic structural diagram of a middle frame according to some embodiments of this application;
FIG. 6 is a schematic flowchart of a manufacturing method of an arc battery according to some embodiments of this application;
FIG. 7 is a schematic diagram of a middle frame and cover plates before assembly;
FIG. 8 is a schematic diagram of a middle frame and cover plates after assembly; and
FIG. 9 is a schematic diagram of an arc battery assembled.

Reference signs: 100', 100: arc battery; 10', 10: housing; 11: first part; 12: second part; 13', 13: accommodating cavity; 14: middle frame; 141: opening; 142: first wall; 1421: arc edge; 143: second wall; 1431: straight edge; 15: cover plate; 151: arc end; 152: straight end; 20', 20: electrode assembly; 21: positive electrode tab; 22: negative electrode tab; 23: inner arc surface; 24: outer arc surface; 30: electrode terminal; 40: pressure relief mechanism; 50: electrolyte injection hole; 60: blocking piece; X': height direction of the electrode assembly; Y': thickness direction of the electrode assembly; X: first direction; Y: second direction; and Z: third direction.

### DESCRIPTION OF EMBODIMENTS

To make the objectives, technical solutions, and advantages of some embodiments of this application clearer, the following clearly and completely describes the technical solutions in some embodiments of this application with reference to the accompanying drawings in some embodiments of this application. Apparently, the described embodiments are some but not all of some embodiments of this application. Generally, the components of some embodiments of this application as described and illustrated in the accompanying drawings herein can be arranged and designed in a variety of configurations.

Therefore, the following detailed description of some embodiments of this application as provided in the accompanying drawings is not intended to limit the scope of this application but merely to represent selected embodiments of this application. All other embodiments obtained by persons of ordinary skill in the art based on some embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined and explained in the subsequent drawings.

In the description of some embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of market development, secondary batteries are more widely applied. Secondary batteries have been widely used in electric transportation tools such as electric bicycles, electric motorcycles, and electric vehicles, and fields such as electric tools, unmanned aerial vehicles, and energy storage devices. With continuous expansion of application fields of secondary batteries, market demands for the secondary batteries are also expanding. Secondary batteries include button batteries, arc batteries, and the like.

Arc batteries are widely used in the field of wearable electronic products, such as VR (Virtual Reality, virtual reality) head mounted displays, AR (Augmented Reality, augmented reality) glasses, bands, and rings. Wearable devices are extremely space-sensitive, and therefore batteries need to have a high volumetric energy density. A packaging region of the head of a pouch arc battery has low space utilization. In addition, due to insufficient strength, a metal housing is usually required to serve as a support frame outside the arc battery, greatly wasting battery compartment space of end products. Therefore, arc batteries with a hard housing having both good structural strength and energy density have emerged.

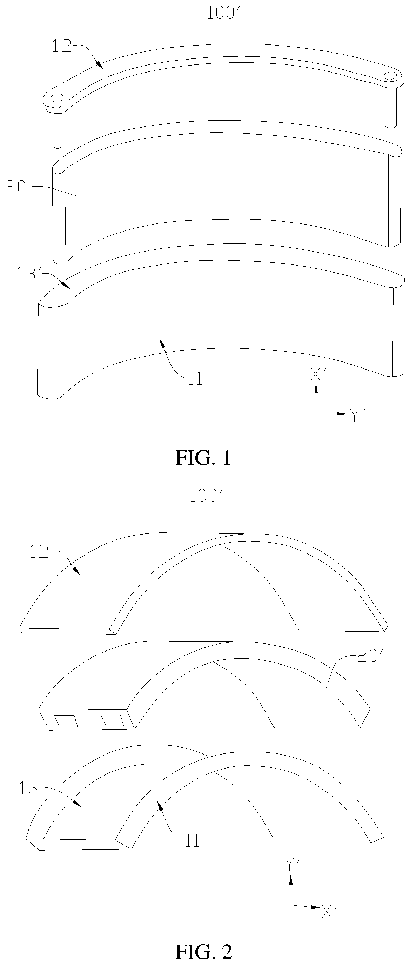

The inventors have found that the difficulty of manufacturing housings for existing arc batteries with hard housings is large. As shown in FIG. 1, an arc battery 100' with a hard housing includes a housing 10' and an electrode assembly 20'. The electrode assembly 20' is accommodated in the housing 10'. The housing 10' includes a first part 11 and a second part 12. The first part 11 is formed through stamping. The first part 11 is a hollow structure open at one end in a height direction X' of the electrode assembly and having an accommodating cavity 13'. The electrode assembly 20' is placed into the accommodating cavity from the open end of the first part 11, and the second part 12 covers the open end of the first part 11. The first part 11 has a large dimension in the height direction X' of the electrode assembly, thus a large stamping depth is required, leading to a large stamping difficulty. As shown in FIG. 2, the first part 11 is a hollow structure open at one end in a thickness direction Y' of the electrode assembly and having an accommodating cavity 13'. The electrode assembly 20' is placed into the accommodating cavity 13' from the open end of the first part 11, and the second part 12 covers the open end of the first part 11. Although the first part 11 having a small dimension in the thickness direction Y' of the electrode assembly overcomes the great stamping difficulty caused by a large stamping depth, the first part 11 is arc-shaped, and it is still difficult to form the arc first part 11 having the accommodating cavity 13'.

In view of this, to alleviate the housing forming difficulty of arc batteries, this application provides a housing. The housing includes two cover plates and a middle frame that are separately disposed, where the two cover plates are both arc plates, the middle frame has two opposite openings in a first direction, and the two cover plates are configured to respectively cover the two openings, so that the middle frame and the two cover plates jointly define an accommodating space.

The two cover plates of the housing are both arc plates, and therefore the housing can be used for arc batteries. The housing is divided into two arc cover plates and a middle frame that are separately disposed. The middle frame and the two cover plates each are easy to manufacture, and the separate middle frame and two cover plates are connected to form the housing with the accommodating space, thereby reducing the manufacturing difficulty and costs of housings of arc batteries.

An embodiment of this application provides an electric device using an arc battery having such housing as a power source. The electric device may be but is not limited to a wearable electronic device. Wearable electronic devices include watches, VR head mounted displays, AR glasses, bands, rings, and the like.

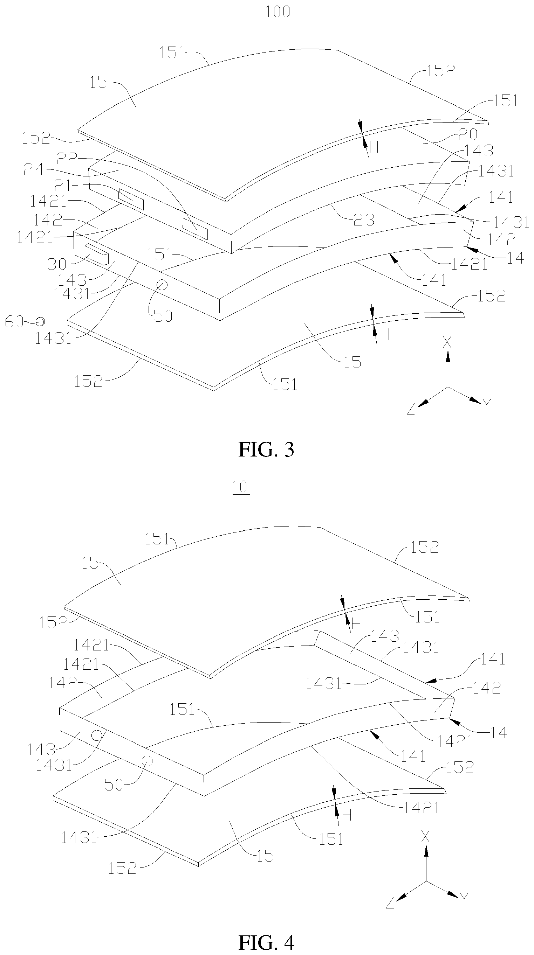

As shown in FIG. 3, an embodiment of this application provides an arc battery 100. The arc battery 100 includes a housing 10 and an electrode assembly 20. An accommodating space is formed inside the housing 10, and the electrode assembly 20 is accommodated in the accommodating space.

The arc battery 100 further includes an electrolyte and the electrolyte is accommodated in the accommodating space.

The electrode assembly 20 is arc-shaped. The electrode assembly 20 includes a positive electrode plate (not shown in the figure), a negative electrode plate (not shown in the figure), and a separator (not shown in the figure). Working of the arc battery 100 mainly relies on migration of metal ions between the positive electrode plate and the negative electrode plate. The positive electrode plate includes a positive electrode current collector and a positive electrode active material layer. The positive electrode active material layer is applied on a surface of the positive electrode current collector. A lithium-ion battery is used as an example, for which, the positive electrode current collector may be made of aluminum, the positive electrode active material layer includes a positive electrode active material, and the positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector may be made of copper, the negative electrode active material layer includes a negative electrode active material, and the negative electrode active material may be carbon, silicon, or the like. The separator may be made of PP (polypropylene, polypropylene), PE (polyethylene, polyethylene), or the like.

The electrode assembly 20 further includes a positive electrode tab 21 and a negative electrode tab 22. The positive electrode tab 21 is connected to the positive electrode current collector, and the negative electrode tab 22 is connected to the negative electrode current collector. The electrode assembly 20 is charged and discharged using the positive electrode tab 21 and the negative electrode tab 22.

As shown in FIG. 3, the arc battery 100 further includes an electrode terminal 30. The electrode terminal 30 is insulatively connected to the housing 10. The electrode terminal 30 is electrically connected to one of the positive electrode tab 21 and the negative electrode tab 22, and the housing 10 is electrically connected to the other one of the positive electrode tab 21 and the negative electrode tab 22, so as to make the electrode terminal 30 and the housing 10 form two output electrodes with opposite polarities of the arc battery 100.

In some other embodiments, the arc battery 100 includes two electrode terminals 30. The two electrode terminals 30 are both insulatively connected to the housing 10. The two electrode terminals 30 are electrically connected to the positive electrode tab 21 and the negative electrode tab 22 respectively so as to make the two electrode terminals 30 form two output electrodes with opposite polarities of the arc battery 100.

The arc battery 100 further includes a pressure relief mechanism 40, and the pressure relief mechanism 40 is disposed in the housing 10. The pressure relief mechanism 40 is configured to release pressure inside the arc battery. The pressure relief mechanism 40 may be in a form of an explosion-proof valve, an explosion-proof sheet, a gas valve, a pressure relief valve, a safety valve, or the like, and may specifically employ an element or part sensitive to pressure or temperature, such that when the internal pressure or temperature of the arc battery 100 reaches a predetermined threshold, the pressure relief mechanism 40 performs an action or a weak structure provided in the pressure relief mechanism 40 is destroyed, thereby forming an opening or a channel for relieving the internal pressure or temperature. The pressure relief mechanism 40 may alternatively be formed by making an indentation in the housing 10 so as to form a weak region on the housing 10, and the weak region is the pressure relief mechanism 40.

The housing 10 is further provided with an electrolyte injection hole 50. The electrolyte is injected into the housing 10 through the electrolyte injection hole 50. The arc battery 100 further includes a blocking piece 60. The electrolyte injection hole 50 is blocked by the blocking piece 60 to prevent electrolyte leakage.

As shown in FIG. 3, FIG. 4, and FIG. 5, the housing 10 includes two cover plates 15 and a middle frame 14 that are disposed separately, where the two cover plates 15 are both arc plates, the middle frame 14 has two opposite openings 141 in a first direction X, and the two cover plates 15 are configured to respectively cover the two openings 141, so that the middle frame 14 and the two cover plates 15 jointly define an accommodating space.

The two cover plates 15 of the housing 10 are both arc plates, and the housing 10 may be used for the arc battery 100. Certainly, the housing 10 may also be used for other types of batteries depending on actual needs.

The middle frame 14 encloses a cavity with the openings 141 at two ends in the first direction X. When the electrode assembly 20 is accommodated in the housing 10, the middle frame 14 surrounds the periphery of the electrode assembly 20. The first direction X may be any direction with respect to the electrode assembly 20. For example, the first direction X may be a thickness direction of the electrode assembly or a width direction of the electrode assembly, or the first direction X may be a height direction of the electrode assembly. FIG. 3 and FIG. 4 show cases in which the first direction X is the thickness direction of the electrode assembly. The electrode terminal 30 and the electrolyte injection hole 50 may be disposed at the middle frame 14.

The electrode assembly 20 has an inner arc surface 23 and an outer arc surface 24 opposite to each other in a thickness direction of the electrode assembly 20. The radius of the outer arc surface 24 is larger than the radius of the inner arc surface 23. One of the two cover plates 15 is arranged facing toward the inner arc surface 23 and matches the inner arc surface 23, and the other of the two cover plates 15 is arranged facing toward the outer arc surface 24 and matches the outer arc surface 24. The pressure relief mechanism 40 may be disposed at the cover plate 15.

The housing 10 is divided into two arc cover plates 15 and a middle frame 14 that are disposed separately. The middle frame 14 and the two cover plates 15 each are easy to manufacture, and the middle frame 14 and two cover plates 15 that are separately disposed are connected to form the housing 10 with the accommodating space, thereby reducing the manufacturing difficulty and costs of the housing 10 of the arc battery 100.

Still referring to FIG. 3 to FIG. 5. In some embodiments, the middle frame 14 includes two first walls 142 provided opposite in a second direction Y and two second walls 143 provided opposite in a third direction Z, the two first walls 142 and the two second walls 143 are connected end to end in sequence, and the first direction X, the second direction Y, and the third direction Z are perpendicular to each other.

In this embodiment, the first direction X is the thickness direction of the electrode assembly, the second direction Y is the height direction of the electrode assembly, and the third direction Z is the width direction of the electrode assembly.

The structure of rectangular middle frame 14 is formed by providing the two first walls 142 opposite in the second direction Y, providing the two second walls 143 opposite in the third direction Z, and connecting the two first walls 142 and the two second walls 143 end to end in sequence, so that the middle frame 14 is simple in structure and easy to manufacture and shape.

In some other embodiments, the middle frame 14 may alternatively take another structural form. For example, the middle frame 14 is a circular frame, an elliptical frame, or the like. The structure form of the middle frame 14 is designed depending on actual needs.

To make the cover plate 15 and the middle frame 14 match better, in some embodiments, the first wall 142 has two opposite arc edges 1421 in the first direction X, and the two cover plates 15 are respectively connected to the two arc edges 1421.

The cover plate 15 has two opposite arc ends 151 in the second direction Y. The two arc ends 151 of a same cover plate 15 are respectively disposed corresponding to arc edges 1421 of the two first walls 142 on a same side in the first direction X and are connected to the corresponding arc edges 1421.

The cover plate 15 and the arc edge 1421 may be connected by welding, bonding, screwing, and the like.

The two arc edges 1421 of the first wall 142 in the first direction X are respectively connected to the two cover plates 15, so as to match the structural shape of the cover plates 15, so that the cover plates 15 can better cover the openings 141 of the middle frame 14, thereby improving the airtightness performance of the accommodating space.

Still referring to FIG. 3 to FIG. 5. In some embodiments, the second wall 143 has two opposite straight edges 1431 in the first direction X, and the two cover plates 15 are respectively connected to the two straight edges 1431.

The cover plate 15 has two opposite straight ends 152 in the third direction Z. The two straight ends 152 of a same cover plate 15 are respectively disposed corresponding to straight edges 1431 of the two second walls 143 on a same side in the first direction X and are connected to the corresponding straight edges 1431.

The cover plate 15 and the straight edge 1431 may be connected by welding, bonding, screwing, and the like.

In some other embodiments, the second wall 143 also has two opposite arc edges 1421 in the first direction X, and the two cover plates 15 are respectively connected to the two arc edges 1421 of the second wall 143. The cover plate 15 also has two arc ends 151 provided opposite in the third direction Z, and therefore the cover plate 15 has four arc ends 151 so that the cover plate 15 is a spherical plate.

The second wall 143 has the two straight edges 1431 in the first direction X so that the second wall 143 better serves as a tab mounting wall, facilitating the connection to the cover plate 15.

In some embodiments, the middle frame 14 is an integrally formed structure. The integrally formed structure is a structure formed as a whole. For example, the middle frame 14 is formed through pouring, stamping, and or the like. The middle frame 14 is an integrally formed structure made in a simple manner, and therefore is easy to manufacture.

In some other embodiments, the middle frame 14 may alternatively be formed in another manner. For example, the middle frame 14 is formed by bending a plate, and two ends of the plate are connected. In an embodiment where the middle frame 14 is a rectangular frame, the plate is bent three times to form the two first walls 142 and the two second walls 143, and then the two ends of the plate are connected to form a circumferentially closed middle frame 14. The two ends of the plate may be connected through welding, bonding, screwing, or the like.

The middle frame 14 is formed by bending a plate and connecting two ends of the plate. This is a simple forming manner, making full use of plates, and facilitates the manufacturing of middle frames 14 of various sizes.

In some embodiments, arc angles and extending directions of the two cover plates 15 are the same.

The bending angles of the two cover plates 15 are the same, and the bending and extending directions of the two cover plates 15 are the same, so that the two cover plates 15 are parallel to each other and the two cover plates 15 are equally spaced at any position. In some other embodiments, the arc angles and/or extending directions of the two cover plates 15 may alternatively be substantially the same.

The arc angles and extending angles of the two cover plates 15 being substantially the same makes the housing 10 more regular in structure, facilitates assembly, and reduces the difficulty of manufacturing the housing 10.

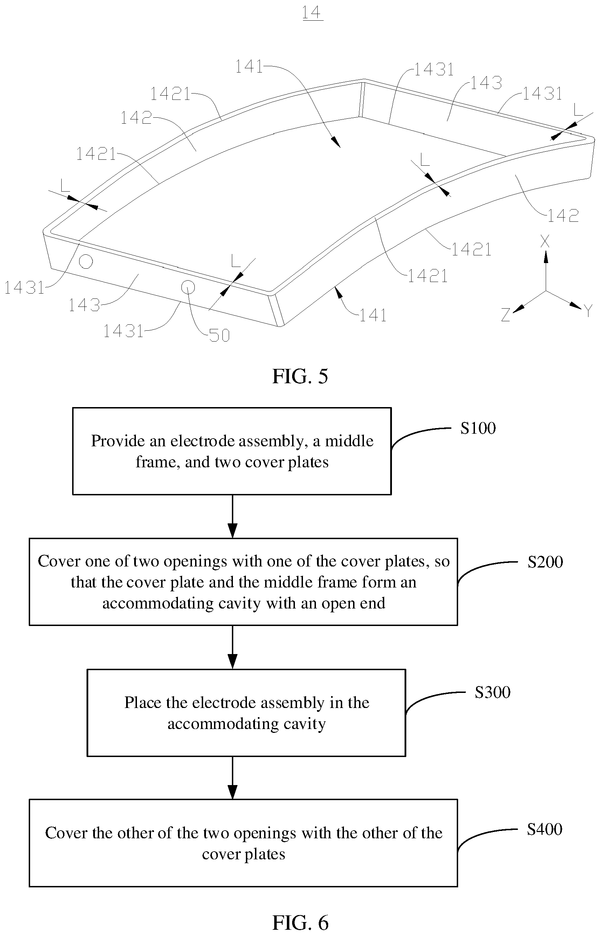

As shown in FIG. 5, in some embodiments, wall thickness of the middle frame 14 is L, satisfying 100 µm ≤ L ≤ 1500 µm.

The middle frame 14 may be a structure with a uniform wall thickness, or a structure with a non-uniform wall thickness. The middle frame 14 of a structure with a non-uniform thickness may have a non-uniform wall thickness due to manufacturing errors, or the middle frame 14 may be manufactured into a structure of a non-uniform wall thickness out of actual needs. In an embodiment where the middle frame 14 is a structure of a non-uniform wall thickness, the wall thickness L of the middle frame 14 is an average wall thickness of the middle frame 14. FIG. 3 to FIG. 5 show cases where the middle frame 14 has a uniform wall thickness.

Specifically, the wall thickness L of the middle frame 14 may be 110 µm, 112 µm, 120 µm, 124 µm, 130 µm, 136 µm, 140 µm, or the like.

The wall thickness L of the middle frame 14 satisfying 100 µm ≤ L ≤ 1500 µm makes the middle frame 14 have higher structural strength so as to better support the two cover plates 15, thereby reducing the collapse risk of the housing 10. In addition, the wall thickness L of the middle frame 14 satisfying 100 µm ≤ L ≤ 1500 µm can make the middle frame 14 have higher rigidity so as to reduce the deformation risks of the middle frame 14 while such deformation makes the housing 10 lose its arc shape or have a lower bending degree.

The wall thickness of the middle frame 14 may be the same as or different from the thickness of the cover plate 15. For example, in some embodiments, the wall thickness of the middle frame 14 is larger than the thickness of the cover plate 15.

The thickness of the cover plate 15 is denoted as H, and L > H. The cover plate 15 may be a structure with a uniform thickness or a structure with a non-uniform thickness. For the cover plate 15 of a structure with a non-uniform thickness, the non-uniform thickness may be caused by manufacturing errors, or the cover plate 15 may be manufactured into a structure with a non-uniform wall thickness due to actual needs. The thickness H of the cover plate 15 is a dimension of the cover plate 15 in the first direction X. In an embodiment where the cover plate 15 is a structure with a non-uniform thickness, the thickness H of the cover plate 15 is an average thickness of the cover plate 15. FIG. 4 shows a case where the cover plate 15 has a uniform thickness. The thicknesses H of the two cover plates 15 may be the same or different.

The thickness of the cover plate 15 being smaller than the wall thickness of the middle frame 14 can guarantee the overall structural strength of the housing 10 and provide a sufficient distance between the two cover plates 15, so as to accommodate a large electrode assembly in the first direction X, thereby helping improve the energy density of arc batteries 100 having such housing 10.

The thickness of the cover plate 15 may be set depending on actual needs. In some embodiments, the wall thickness H of the cover plate 15 satisfies 50 µm ≤ H ≤ 1000 µm. Specifically, the thickness H of the cover plate 15 may be 55 µm, 60 µm, 62 µm, 70 µm, 80 µm, 90 µm, 100 µm, 500 µm, 800 µm, 900 µm, or the like.

The thickness H of the cover plate 15 satisfying 50 µm ≤ H ≤ 1000 µm can guarantee that the cover plate 15 has structural strength that meets actual needs, and provide a sufficient distance between the two cover plates 15 in the first direction X so as to accommodate a large electrode assembly 20 in the first direction X, thereby helping improve the energy density of arc batteries 100 having such housing 10.

In an embodiment where the wall thickness of the middle frame 14 is larger than the thickness of the cover plate 15, 50 µm ≤ L - H ≤ 500 µm is satisfied. Specifically, a difference between the wall thickness L of the middle frame 14 and the thickness H of the cover plate 15 may be 52 µm, 60 µm, 70 µm, 100 µm, 200 µm, 300 µm, 400 µm, or the like. For example, the wall thickness L of the middle frame 14 is 200 µm, the thickness H of the cover plate 15 is 100 µm, and L - H is equal to 100 µm.

The wall thickness L of the middle frame 14 and the thickness H of the cover plate 15 satisfy 50 µm ≤ L- H ≤ 500 µm, and the thickness difference between the cover plate 15 and the middle frame 14 within this range can allow the accommodating space to accommodate a larger electrode assembly 20 in the first direction X, thereby improving the energy density of arc batteries 100 having such housing 10.

In an embodiment where the wall thickness of the middle frame 14 is larger than the thickness of the cover plate 15, 50 µm ≤ L - H ≤ 200 µm, curvature radius R of the cover plate 15 satisfies 80 mm ≤ R ≤ 300 mm; or 200 µm < L - H ≤ 500 µm, a curvature radius R of the cover plate 15 satisfies R < 80 mm.

The curvature radius indicates a degree to which a curve deviates from a straight line. For the inner arc surface 23 and the outer arc surface 24 of the cover plate 15, the curvature radius of the cover plate 15 is a radius of a circle most suitable for a normal section or a combination thereof. The curvature radius is mainly used to reflect a degree of curvature change at a certain point on the curve. A larger curvature radius means a smaller bending degree of the cover plate 15, and a smaller curvature radius indicates a larger bending degree of the cover plate 15.

When the wall thickness of the middle frame 14 is larger than the thickness of the cover plate 15, the curvature radius R of the cover plate 15, the thickness H of the cover plate 15, and the wall thickness L of the middle frame 14 meeting the foregoing relationship can ensure that the housing 10 can accommodate a larger electrode assembly 20 while ensuring that the housing 10 has high structural strength, thereby optimizing the energy density of arc batteries 100 having the housing 10.

Further, the curvature radius R of the cover plate 15 satisfies 80 mm ≤ R ≤ 300 mm, and 50 µm ≤ L - H ≤ 100 µm; or the curvature radius R of the cover plate 15 satisfies R < 80 mm, and 200 µm ≤ L - H ≤ 300 µm.

It can be understood that when the curvature radius R of the cover plate 15 satisfies 80 mm ≤ R ≤ 300 mm, 50 µm ≤ L - H ≤ 100 µm; or when the curvature radius R of the cover plate 15 satisfies R < 80 mm, 200 µm ≤ L - H ≤ 300 µm. For example, when R = 90 mm, L - H = 80 µm; when R = 100 mm, L - H = 70 µm; when R = 70 mm, L - H = 220 µm; when R = 60 mm, L - H = 250 µm; when R = 50 mm, L - H = 270 µm; when R = 40 mm, L - H = 280 µm.

The curvature radius R of the cover plate 15, the thickness H of the cover plate 15, and the wall thickness L of the middle frame 14 meeting the foregoing relationship can ensure that the housing 10 can accommodate a larger electrode assembly 20 while ensuring that the housing 10 has high structural strength, thereby optimizing the energy density of arc batteries 100 having such housing 10, and allowing the structure and size of products to better meet actual needs.

In some other embodiments, a thickness of the cover plate 15 is larger than wall thickness of the middle frame 14. That is, H > L. A larger thickness of the cover plate 15 indicates higher strength of the cover plate 15, and therefore the cover plate 15 has better damage resistance and the housing 10 has higher overall structural strength. A larger thickness of the cover plate 15 indicates higher rigidity of the cover plate 15, and therefore the cover plate 15 has better deformation resistance. During charge and discharge of the arc battery 100, a higher ability of the cover plate 15 to resist the deformation caused by internal swelling of the arc battery 100 indicates a more stable arc shape for the cover plate 15.

Certainly, in some other embodiments, the thickness of the cover plate 15 may be the same as the wall thickness of the middle frame 14, that is, H = L.

In some embodiments, the thickness H of the cover plate 15 satisfies 150 µm ≤ H ≤ 2000 µm. Specifically, the wall thickness L of the middle frame 14 may be 155 µm, 160 µm, 200 µm, 300 µm, 400 µm, 500 µm, 700 µm, 900 µm, 1500 µm, or the like.

In a case of 150 µm ≤ H ≤ 2000 µm, the thickness of the cover plate 15 may be larger than, smaller than, or equal to the wall thickness of the middle frame 14.

The wall thickness H of the cover plate 15 satisfying 150 µm ≤ L ≤ 2000 µm allows the cover plate 15 to have higher structural strength and high rigidity so as to reduce the deformation risks of the cover plate 15 while such deformation makes the housing 10 lose its arc shape or have a lower bending degree.

In an embodiment where the thickness of the cover plate 15 is larger than the wall thickness of the middle frame 14, the wall thickness L of the middle frame 14 satisfies 50 µm ≤ H - L ≤ 500 µm. Specifically, a difference between the thickness H of the cover plate 15 and the wall thickness L of the middle frame 14 may be 52 µm, 60 µm, 70 µm, 100 µm, 200 µm, 300 µm, 400 µm, or the like. For example, the wall thickness L of the middle frame is 150 µm, the thickness H of the cover plate is 250 µm, and H - L is equal to 100 µm.

The wall thickness L of the middle frame 14 satisfies 50 µm ≤ H - L ≤ 500 µm, and the thickness difference between the cover plate 15 and the middle frame 14 within this range reduces the deformation risks of the cover plate 15 caused by swelling in arc batteries 100 having such housing 10 while such deformation makes the housing 10 lose its arc shape or have a lower bending degree. The housing 10 satisfying 50 µm ≤ H - L ≤ 500 µm may be used for material systems with large swelling of negative electrode plates.

In an embodiment where the thickness of the cover plate 15 is larger than the wall thickness of middle frame 14, 20 µm ≤ H - L ≤ 100 µm, and curvature radius R of the cover plate 15 satisfies 80 mm ≤ R ≤ 300 mm; or 100 µm < H - L ≤ 500 µm, and curvature radius R of the cover plate 15 satisfies R < 80 mm.

When the thickness of the cover plate 15 is larger than the wall thickness of the middle frame 14, the curvature radius R of the cover plate 15, the thickness H of the cover plate 15, and the wall thickness L of the middle frame 14 meeting the foregoing relationship can allow the cover plate 15 to deform least in a case of internal swelling of arc batteries 100 having such housing 10, thereby reducing the deformation risks of the cover plate 15 caused by swelling in arc batteries 100 having such housing 10 while such deformation makes the housing 10 lose its arc shape or have a lower bending degree.

Further, the curvature radius R of the cover plate 15 satisfies 80 mm ≤ R ≤ 300 mm, and 20 µm ≤ H - L ≤ 50 µm; or the curvature radius R of the cover plate 15 satisfies R < 80 mm, and 100 µm < H - L ≤ 200 µm.

It can be understood that when the curvature radius R of the cover plate 15 satisfies 80 mm ≤ R ≤ 300 mm, 20 µm ≤ H - L ≤ 50 µm; or when the curvature radius R of the cover plate 15 satisfies R < 80 mm, 100 µm < H - L ≤ 200 µm. For example, when R = 90 mm, H - L = 40 µm; when R = 100 mm, H - L = 30 µm; when R = 70 mm, H - L = 120 µm; and when R = 60 mm, L - H = 150 µm.

The curvature radius R of the cover plate 15, the thickness H of the cover plate 15, and the wall thickness L of the middle frame 14 meeting the foregoing relationship can allow the cover plate 15 to deform least in a case of internal swelling of arc batteries 100 having such housing 10, thereby reducing the deformation risks of the cover plate 15 caused by swelling in arc batteries 100 having such housing 10 while such deformation makes the housing 10 lose its arc shape or have a lower bending degree, and allowing the structure and size of products to better meet actual needs.

An embodiment of this application further provides an arc battery 100. The arc battery 100 includes an electrode assembly 20 and the housing 10 according to any foregoing embodiment.

The housing 10 according to any foregoing embodiment includes two cover plates 15 and a middle frame 14 that are disposed separately. The middle frame 14 and the two cover plates 15 each are easy to manufacture, the middle frame 14 and two cover plates 15 that are separately disposed are connected to form the housing 10 with an accommodating space, and therefore the difficulty of manufacturing the housing 10 is reduced, thereby reducing the manufacturing difficulty and cost of the arc battery 100.

An embodiment of this application further provides an electric device including the arc battery 100 according to the foregoing embodiments. The electric device includes an electric body, and the arc battery 100 is configured to provide electric energy for the electric body. The electric body may be a main structure of a VR head mounted display, AR glasses, a band, a ring, or the like.

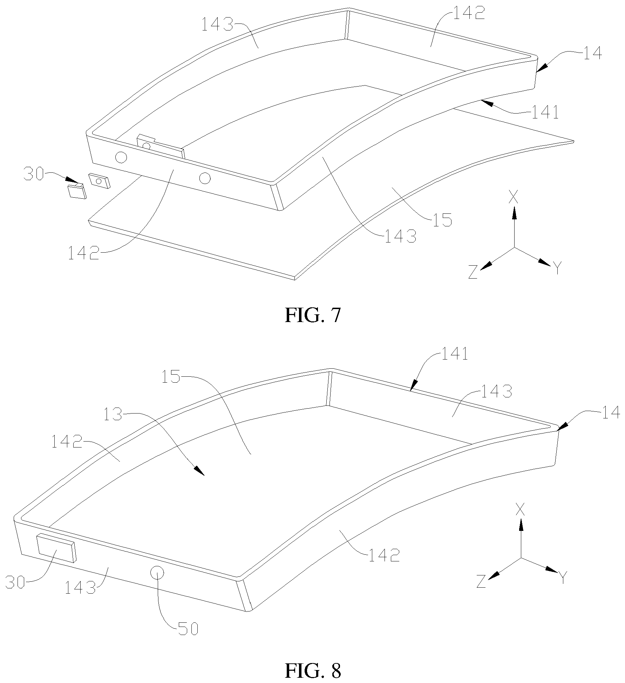

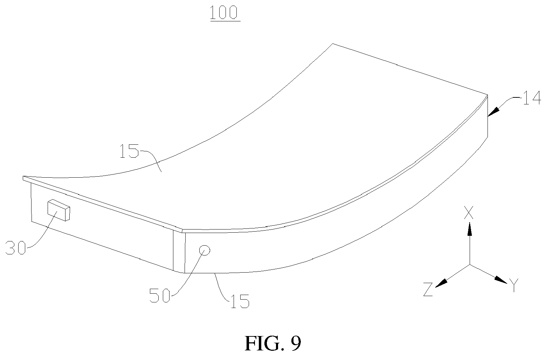

Referring to FIG. 6 to FIG. 9. An embodiment of this application further provides a manufacturing method for an arc battery 100. The manufacturing method includes:

S100. Provide an electrode assembly 20, a middle frame 14, and two cover plates 15, where the two cover plates 15 are both arc plates, and the middle frame 14 has two opposite openings 141.

S200. Cover one of the two openings 141 with one of the cover plates 15, so that the cover plate 15 and the middle frame 14 form an accommodating cavity 13 with an open end.

S300. Place the electrode assembly 20 in the accommodating cavity 13.

S400. Cover the other of the two openings 141 with the other of the cover plates 15.

As shown in FIG. 6, FIG. 7, and FIG. 8, in step S200, one of the two openings 141 of the middle frame 14 is covered with one of the two cover plates 15 to form the accommodating cavity with one opening 141 at one end, and the electrode assembly is placed in the accommodating cavity from the opening 141. Two first walls 142 of the middle frame 14 have two opposite arc edges 1421 in a first direction X, and the first wall 142 is also an arc plate. Therefore, one of the two openings 141 of the middle frame 14 is larger than the other. For ease of placing battery cells into the accommodating cavity, the cover plate 15 covers a smaller opening 141 in step S200.

Before step S200 is performed, an electrode terminal 30 may be mounted at the middle frame 14 first. Alternatively, an electrode terminal 30 is mounted at the middle frame 14 after step S200 is performed but before step S300 is performed.

The middle frame 14 and two cover plates 15 that are separately disposed are assembled to form the housing for accommodating the electrode assembly. The manufacturing difficulty of the middle frame 14 and the two cover plates 15 is small so that the manufacturing difficulty of the arc battery is small.

An embodiment of this application provides an arc battery 100. A housing 10 of the arc battery 100 includes two arc cover plates 15 and a middle frame 14 that are disposed separately. The middle frame 14 has two openings 141 in a first direction X. Arc ends 151 of the two cover plates 15 are respectively welded to arc edges 1421 of two first walls 142 of the middle frame 14. Two arc ends 151 of one of the two cover plates 15 are respectively welded to arc edges 1421 of the two first walls 142 of the middle frame 14 on a same side in the first direction X, and two straight ends 152 of the cover plate 15 are welded to straight edges 1431 of two first walls 142 of the middle frame 14 on a same side in the first direction X so that the middle frame 14 and the cover plate 15 define an accommodating cavity with an opening 141 at one end. Then, an electrode assembly is placed in the accommodating cavity. Then, two arc ends 151 of the other of the two cover plates 15 are respectively welded to arc edges 1421 of the two first walls 142 of the middle frame 14 on the other side in the first direction X, and two straight ends 152 of the cover plate 15 are welded to straight edges 1431 of two first walls 142 of the middle frame 14 on the other side in the first direction X so that the middle frame 14 and the cover plate 15 define an accommodating space for accommodating an electrode assembly 20.

The housing 10 is divided into two arc cover plates 15 and a middle frame 14 that are disposed separately. The middle frame 14 and the two cover plates 15 each are easy to manufacture, and the middle frame 14 and two cover plates 15 that are separately disposed are connected to form the housing 10 with the accommodating space, thereby reducing the manufacturing difficulty and costs of the housing 10 of the arc battery 100.

The foregoing descriptions are some embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A housing, comprising two cover plates and a middle frame that are separately disposed, wherein the two cover plates are both arc plates, the middle frame has two opposite openings in a first direction, and the two cover plates are configured to respectively cover the two openings, so that the middle frame and the two cover plates jointly define an accommodating space.

2. The housing according to claim 1, wherein the middle frame comprises two first walls provided opposite in a second direction and two second walls provided opposite in a third direction, the two first walls and the two second walls are connected end to end in sequence, and the first direction, the second direction, and the third direction are perpendicular to each other.

3. The housing according to claim 2, wherein the first wall has two opposite arc edges in the first direction, and the two cover plates are respectively connected to the two arc edges.

4. The housing according to claim 3, wherein the second wall has two opposite straight edges in the first direction, and the two cover plates are respectively connected to the two straight edges.

5. The housing according to claim 1, wherein the middle frame is an integrally formed structure.

6. The housing according to claim 1, wherein the middle frame is formed by bending a plate, and two ends of the plate are connected.

7. The housing according to claim 1, wherein arc angles and extending directions of the two cover plates are the same.

8. The housing according to claim 1, wherein wall thickness of the middle frame is L, satisfying 100 µm ≤ L ≤ 1500 µm.

9. The housing according to any one of claims 1 to 8, wherein wall thickness of the middle frame is larger than a thickness of the cover plate.

10. The housing according to claim 9, wherein wall thickness of the cover plate is H, satisfying 50 µm ≤ H ≤ 1000 µm.

11. The housing according to claim 9, wherein the wall thickness of the middle frame is L, the wall thickness of the cover plate is H, and 50 µm ≤ L - H ≤ 500 µm.

12. The housing according to claim 11, wherein 50 µm ≤ L - H ≤ 200 µm, and a curvature radius R of the cover plate satisfies 80 mm ≤ R ≤ 300 mm; or
200 µm < L - H ≤ 500 µm, and curvature radius R of the cover plate satisfies R < 80 mm.

13. The housing according to claim 12, wherein the curvature radius R of the cover plate satisfies 80 mm ≤ R ≤ 300 mm, and 50 µm ≤ L - H ≤ 100 µm; or
the curvature radius R of the cover plate satisfies R < 80 mm, and 200 µm ≤ L - H ≤ 300 µm.

14. The housing according to any one of claims 1 to 8, wherein a thickness of the cover plate is larger than wall thickness of the middle frame.

15. The housing according to claim 14, wherein the thickness H of the cover plate satisfies 150 µm ≤ H ≤ 2000 µm.

16. The housing according to claim 14, wherein the wall thickness L of the middle frame and the thickness H of the cover plate satisfy 50 µm ≤ H - L ≤ 500 µm.

17. The housing according to claim 16, wherein 20 µm ≤ H - L ≤ 100 µm, and curvature radius R of the cover plate satisfies 80 mm ≤ R ≤ 300 mm; or
100 µm < H - L ≤ 500 µm, and a curvature radius R of the cover plate satisfies R < 80 mm.

18. The housing according to claim 17, wherein the curvature radius R of the cover plate satisfies 80 mm ≤ R ≤ 300 mm, and 20 µm ≤ H - L ≤ 50 µm; or
the curvature radius R of the cover plate satisfies R < 80 mm, and 100 µm < H - L ≤ 200 µm.

19. An arc battery, comprising:
the housing according to any one of claims 1 to 18; and
an electrode assembly accommodated in the accommodating space.

20. An electric device, comprising the arc battery according to claim 19.
